# EUROPÄISCHE PATENTSCHRIFT

(11) **EP 2 004 880 B1**
(45) Veröffentlichungstag und Bekanntmachung des Hinweises auf die Patenterteilung: **16.03.2016**
(21) Anmeldenummer: 07727806.7
(22) Anmeldetag: 04.04.2007
(51) Int. Cl.: C25B 11/04, C02F 1/461, B32B 5/00, B32B 9/00

(54) **VERFAHREN ZUR HERSTELLUNG EINER DIAMANTELEKTRODE**
METHOD FOR THE PRODUCTION OF A DIAMOND ELECTRODE
PROCÉDÉ DE RÉALISATION D'UNE ÉLECTRODE EN DIAMANT

(30) Priorität: 10.04.2006 AT 6202006
(43) Veröffentlichungstag der Anmeldung: 24.12.2008
(73) Patentinhaber: Pro Aqua Diamantelektroden Produktion GmbH & Co KEG, 8712 Niklasdorf (AT)
(72) Erfinder: SCHELCH, Michael, A-8600 Bruck an der Mur (AT); STABER, Wolfgang, A-8600 Bruck an der Mur (AT); WESNER, Wolfgang, A-1050 Wien (AT); HERMANN, Robert, A-8600 Bruck an der Mur (AT)
(74) Vertreter: Vinazzer, Edith
(86) Internationale Anmeldenummer: PCT/EP2007/053337
(87) Internationale Veröffentlichungsnummer: WO 2007/116004

(56) Entgegenhaltungen:
- EP-A1- 0 691 660
- WO-A-2004/005585
- AT-B- 413 109
- JP-A- 2005 272 908
- JP-A- 2005 272 910
- JP-A- 2005 325 417

## Beschreibung

Die Erfindung betrifft ein Verfahren zur Herstellung einer Diamantelektrode mit synthetisch hergestellten und elektrisch leitfähigen (dotierten) Diamantpartikeln, welche in eine Trägerschicht aus elektrisch nicht leitfähigem Material eingebettet werden.

Diamantelektroden zeichnen sich durch eine hohe Überspannung für Sauerstoff und Wasserstoff aus und sind daher für eine Vielzahl von Oxidationsprozessen in wässriger Lösung besonders geeignet. Mögliche und besonders interessante Anwendungen liegen im Bereich der Wasseraufbereitung durch anodische Oxidation sowie im Bereich der Synthesechemie.

Es ist bekannt, Diamantelektroden durch ein direktes Erzeugen von Bor dotierten Diamantschichten auf Substratmaterialien, insbesondere durch CVD (Chemical Vapor Deposition) - Verfahren herzustellen, beispielsweise gemäß der DE 10324558. Aus der EP 1527212 ist ein Verfahren zur Herstellung von Diamantelektroden bekannt, bei welchem dotierte, elektrisch leitfähige und synthetisch hergestellte Diamantpartikel oberflächlich in ein Metall oder eine Metalllegierung derart eingebettet werden, dass eine leitfähige Verbindung zwischen dem Metall bzw. der Metalllegierung und den Diamantpartikeln entsteht. Die Diamantpartikel werden mit Pulvern aus Metallen oder Metalllegierungen, welche zur Ausbildung einer nicht leitenden Oxidschicht fähig sind, gemischt und anschließend gepresst, sodass ein Pressteil, gegebenenfalls mit einer Trägerplatte, entsteht, welcher die Diamantpartikel in einer oder mehreren Schichten eingebettet enthält. Als Ausgangsmaterialien für die Einbettungsschicht werden niedrig schmelzende Materialien, beispielweise Magnesium oder eine Magnesiumlegierung, vorgeschlagen, welche auf eine vorzugsweise metallische Trägerschicht mit einem höheren Schmelzpunkt aufgeschmolzen werden.

Zum Stand der Technik wird ferner auf die WO 2005116298 verwiesen, welche sich mit der Herstellung von Kunststoff - Diamantelektroden befasst, auf die JP 2005272908, aus welcher eine bipolare Diamantelektrode bekannt ist, und auf die US 2005200260, welche ein Verfahren betrifft, bei welchem Metall auf Diamanten abgeschieden wird.

Nach dem benannten CVD-Verfahren hergestellte Diamantelektroden sind bezüglich ihrer Größe eingeschränkt. Größere Elektrodenflächen neigen aufgrund der unterschiedlichen Wärmeausdehnungskoeffizienten zu Rissbildung, welche in weiterer Folge durch Gasentwicklung unter der Diamantschicht zur Zerstörung der Elektrode führen kann. Die Diamantschicht muss daher, um die Haltbarkeit der Elektrode zu gewährleisten, eine gewisse Mindestdicke aufweisen, welche nur durch einen mehrstündigen Abscheidungsprozess zu erreichen ist. Die Herstellungskosten sind daher bei derart hergestellten Diamantelektroden vergleichsweise hoch.

Diamantelektroden, welche gemäß der EP 1527212 durch die Anbindung von Diamantpartikeln an selbstpassivierende Metalle hergestellt werden, weisen in jenen Medien, in welchen das Metalloxid unter anodischen bzw. kathodischen Bedingungen stabil ist, eine gute Haltbarkeit auf. In stark halogenidhaltigen wässrigen Lösungen sowie in organischen Lösungen, wie sie bei der elektroorganischen Synthese eingesetzt werden, ist die Haltbarkeit derartiger Elektroden etwas geringer. Bei Wechselstromanwendungen beeinträchtigt Hydridkorrosion die Haltbarkeit der Elektroden.

Der Erfindung liegt die Aufgabe zugrunde, ein Verfahren zur Herstellung von in aggressiven Medien gut haltbaren Diamantelektroden sowie entsprechende Diamantelektroden zur Verfügung zu stellen. Erfindungsgemäß hergestellte Diamantelektroden sollen insbesondere in Halogensäuren, in Salzlösungen, Sole, Meerwasser und bei der organischen Synthese mit Alkoholaten besonders haltbar sein.

Gelöst wird die gestellte Aufgabe erfindungsgemäß dadurch, dass zwei trägerschichtbildende Folien, zwischen welchen die dotierten Diamantpartikel einlagig eingebettet sind, miteinander fest verbunden werden, wobei anschließend die Diamantpartikel an beiden Seiten der Trägerschicht freigelegt werden.

Erfindungsgemäß hergestellte und ausgeführte Diamantelektroden können durch die Wahl des Folienmaterials in den erwähnten aggressiven Medien, wie Halogensäuren, Salzlösungen, Sole und Meerwasser sowie bei der organischen Synthese mit Alkoholaten sehr gut haltbar ausgeführt sein. Ihr Einsatzbereich erstreckt sich über den gesamten pH-Bereich von 0 bis 14. Erfindungsgemäße Diamantelektroden sind ferner weitgehend wartungsfrei, da durch Umpolung Ablagerungen, wie etwa Kalk, aufgelöst werden können, sodass nicht mit Säure gewaschen werden muss. Erfindungsgemäß hergestellte und ausgeführte Diamantelektroden können ferner als Anode oder als Kathode eingesetzt werden, sie können regelmäßig umgepolt oder mit Wechselstrom betrieben werden, ohne dass die Elektroden durch Hydridbildung Schaden nehmen.

Gemäß einer bevorzugten Ausführungsform der Erfindung wird als Material für die Trägerschicht, zur mechanischen Fixierung der Diamantpartikel, Glas, Keramik, oder ein Kunststoff, insbesondere PVDF, PFA, PTFE, FEP ETFE, PEEK oder PPS, verwendet (Anspruch 2). Diese Materialien sind unter kathodischen und anodischen Bedingungen gleichermaßen gut geeignet und zeigen keine Empfindlichkeit gegen Hydridkorrosion, Sauerstoffkorrosion oder sonstige chemische Einwirkungen.

Bei einer bevorzugten Ausführungsvariante der Erfindung weisen die Folien, zwischen welchen die dotierten Diamantpartikel eingebracht werden, eine Dicke von 5 µm bis 300 µm, vorzugsweise eine Dicke von 10 µm bis 150 µm auf (Anspruch 6). Zum Verbinden der beiden Folien eignen sich beispielsweise Erhitzen (über Schmelztempertur), Verschweißen, Löten, Sintern, Verpressen, Walzen oder Verkleben (Anspruch 2).

Bei einer bevorzugten Ausführungsform der Erfindung wird zur Erhöhung der mechanischen Festigkeit ein Stützgitter, Stützgewebe oder dergleichen zwischen die beiden Folien eingebracht, bevor diese fest miteinander verbunden werden. Bei einer alternativen Ausführungsform kann das Gitter oder das Gewebe auch nach der Fertigstellung der Diamantelektrode durch gängige Verfahren der Verbindung von Kunststoffen mit Kunststoffen oder Metallen, beispielsweise durch Laminieren oder Kleben ein- oder beidseitig an der Oberfläche der Diamantelektrode fixiert werden (Anspruch 7). Als Materialien für das Stützgewebe bzw. Stützgitter kommen Kunststoffe, wie PVDF, PFA, PTFE, FEP, ETFE, PEEK oder PPS, Glasfasern, kunststoffbeschichtete Glasfasern, Keramiken oder Metalle, wie beispielsweise Titan oder Tantal, zum Einsatz (Anspruch 8).

In bevorzugter Weise werden die Diamantpartikel bereits im Schritt des Erhitzens (Aufschmelzens) freigelegt. Damit die Diamantpartikel beidseitig freiliegen, wird außenseitig auf die trägerschichtbildenden Folien ein zusätzliches, weiches Material in Form von dünnen Platten aufgelegt, in welches die Diamantpartikel durch das Anlegen von beid- oder einseitigem Druck eindringen und daher freigelegt werden. Als Material für diese Platten kommen beispielsweise Polytetrafluoräthylen, Polyimid, Neopren (Polychloropren), thermoplastische Vulkanisate (TPV) Fluorpolymerisate, Fluorkautschuke wie z.B. FPM oder FKM, PEEK, Silikone aber auch Metalle, wie z.B. Blei, Aluminium oder Kupfer, in Frage (Anspruch 3). Die Dicke dieser Materialien beträgt dabei 0,2 mm bis 3 mm, in einer bevorzugten Ausführungsform 0,5 mm bis 1,5 mm (Anspruch 4).

Alternativ oder, falls erforderlich, in einem weiteren Bearbeitungsschritt, werden die Diamantpartikel an beiden Seiten der Trägerschicht auf mechanische, chemische oder thermische Weise, freigelegt (Anspruch 5). Auf diese Weise kann in jedem Fall sichergestellt werden, dass die Diamantpartikel auf beiden Seiten der Trägerschicht kontaktierbar sind.

An den derart hergestellten Rohling kann einseitig eine Kontaktierungsschicht angebracht werden, welche es dauerhaft ermöglicht, die Diamantpartikel mit Strom zu versorgen. Als elektrisch leitfähiges Material kommen vor allem Graphit, Kohle oder Kohlefasern in Frage. Dieses Material kann ein Pulver, eine Paste oder ein Gewebe sein (Anspruch 9).

In der Kontaktierungsschicht kann zur Verbesserung des Kontaktes eine Leitsalzlösung, vorzugsweise Na₂SO₄, verwendet werden.

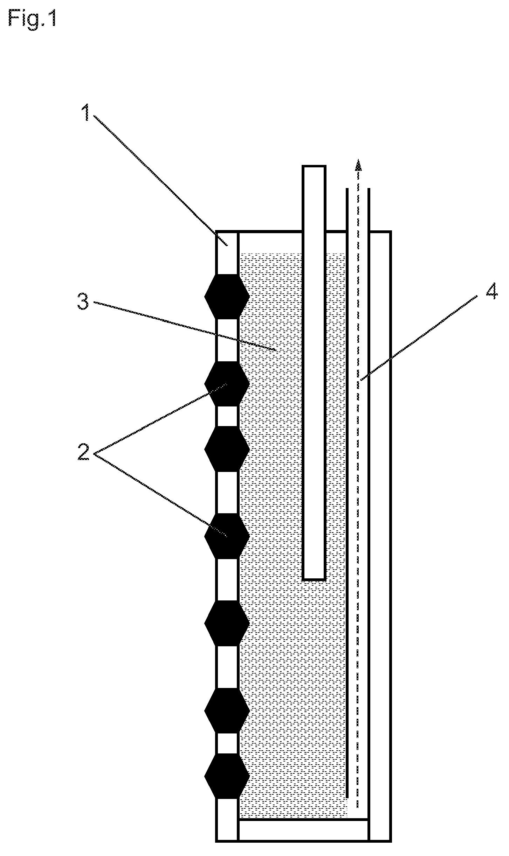

Die Erfindung wird anhand der Zeichnung, die ein Ausführungsbeispiel darstellt, näher erläutert. Die einzige Zeichnungsfigur, Fig. 1, zeigt schematisch einen Querschnitt durch eine erfindungsgemäß ausgeführte und hergestellte Diamantelektrode.

Die in der Zeichnungsfigur gezeigte Diamantelektrode besteht aus einer Lage von Diamantpartikeln 2, welche in eine Trägerschicht 1 eingebettet sind. Die Diamantpartikel 2 sind einlagig ohne gegenseitigen Kontakt miteinander in der Trägerschicht 1 derart eingebettet, dass sie beidseitig aus der Trägerschicht 1 etwas herausragen und freigelegt sind. An der einen Seite der Trägerschicht 1 ist eine Kontaktierungsschicht 3 aus einem elektrisch leitfähigen Material aufgebracht. Durch die Kontaktierungsschicht 3 erfolgt die Stromzufuhr 4.

Für erfindungsgemäße Diamantelektroden sind Diamantpartikel 2 verschiedenster Form und Größe und aus unterschiedlichen Erzeugungsprozessen einsetzbar. Besonders eignet sich leitfähiges oder halbleitendes Diamantpulver, welches eine Korngröße von 80 µm bis 500 µm, insbesondere bis zu 300 µm, aufweist. Die Diamantpartikel 2 sind insbesondere mit Bor oder Stickstoff dotiert. Ein bevorzugtes Ausgangsmaterial für die Herstellung erfindungsgemäßer Diamantelektroden sind im Hochdruck- Hochtemperaturverfahren hergestellte, Bor dotierte Industriediamanten, welche einen besonders hohen Anteil an sp3-Kohlenstoff aufweisen.

Die Trägerschicht 1 dient zur mechanischen Fixierung der Diamantpartikel 2, insbesondere in einer Ebene, und besteht aus einem im jeweiligen Anwendungsmedium unter kathodischen und anodischen Bedingungen inerten Material, welches vorzugsweise unempfindlich ist gegenüber Hydridkorrosion, Sauerstoffkorrosion und sonstigen chemischen Einwirkungen, Besonders geeignet sind Glas, Keramik und chemisch stabile Polymere, beispielsweise fluorierte Polymere wie Polytetrafluoräthylen, PVDF, PFA, PTFE, FEP, ETFE, PEEK oder PPS.

Das Ausgangsmaterial für die Trägerschicht 1 sind Folien. Bei der Verwendung von Folien werden die Diamantpartikel 2 zwischen zwei Folien aus dem gewählten Material, beispielsweise aus Glas, Keramik oder Kunststoff, eingebettet. Anschließend werden die beiden Folien miteinander verbunden, beispielsweise durch Erhitzen (Aufschmelzen), Verschweißen, Löten, Sintern, Pressen, Walzen oder Kleben. Die Folien weisen eine Stärke von 5 µm bis 300 µm, vorzugsweise von 10 µm bis 150 µm, auf. Die erhabenen Teile der Diamantpartikel werden auf beiden Seiten freigelegt, beispielsweise auf mechanische, chemische oder thermische Weise.

Besonders vorteilhaft ist es, die Diamantpartikel bereits beim Erhitzen bzw. Aufschmelzen der beiden Folien an den Folienaußenseiten freizulegen. Dazu wird auf den Außenseiten der die Trägerschicht bildenden Folien jeweils ein weiches Material in Form von dünnen Platten aufgelegt. Durch das Anlegen von flächigem Druck - beid- oder einseitig - dringen die Diamantpartikel durch das Folienmaterial und werden so freigelegt. Als bevorzugtes Material für die dünnen Platten kommen beispielsweise Polytetrafluoräthylen, ein Fluoropolymer -Elastomer, Polyimid, Neopren, thermoplastische Vulkanisate (TPV), Fluorpolimerisate wie PO, Fluorkautschuke, wie beispielsweise FPM oder FKM, PEEK, Silikone, aber auch Metalle wie beispielsweise Blei, Aluminium oder Kupfer, in Frage. Die Dicke der Platten wird zwischen 0,2 mm bis 3 mm, insbesondere zwischen 0,5 mm und 1,5 mm, gewählt. Falls erforderlich, kann auch hier in einem weiteren Bearbeitungsschritt ein komplettierendes Freilegen der Diamantpartikel auf mechanische, chemische oder thermische Weise erfolgen.

Zur Erhöhung der mechanischen Festigkeit der Diamantelektrode kann bei der Herstellung der Diamantelektrode zwischen die beiden Folien ein Stützgitter, Stützgewebe oder dergleichen eingebracht werden. Es ist jedoch auch möglich, ein Stützgitter, Stützgewebe oder dergleichen nach der Fertigstellung der Diamantelektrode auf einer der beiden oder auf beiden Außenseiten zu fixieren.

Dazu kommen die üblichen Verfahren der Verbindung von Kunstoffen oder Metallen in Frage, beispielsweise Laminieren oder Kleben. Als Material für das Stützgitter, Stützgewebe oder dergleichen eignen sich Kunststoffe wie Polytetrafluoräthylen, PVDF, PFA, PTFE, FEP, ETFE, PEEK oder PPF, Glasfasern, kunststoffbeschichtete Glasfasern, Keramiken oder Metalle, wie beispielsweise Titan oder Tantal.

An der einen Seite der Trägerschicht 1 kann eine Kontaktierungsschicht 3 angebracht werden, welche es ermöglicht, die Diamantpartikel 2 dauerhaft mit Strom zu versorgen. Grundsätzlich sind alle Arten von leitfähigen Materialien für die Kontaktierungsschicht 3 geeignet. Es ist jedoch zu berücksichtigen, dass eine dauerhaltbare und flüssigkeitsdichte Einbindung der Diamantpartikel 2 in die Trägerschicht 1 kaum möglich ist. Es ist nicht auszuschließen, dass Diamantpartikel 2 im Betrieb der Elektrode an manchen Stellen die Anbindung zur Trägerschicht 1 verlieren. Die Vorgänge, die eine Ablösung verursachen können, sind dabei nicht nur chemischer Natur, wie Oxidation und Korrosion, sondern haben auch physikalische Ursachen. So kann beispielsweise Wärmeentwicklung durch Stromfluss zu einer Rissbildung zwischen den Diamantpartikeln 2 und dem Trägerschichtmaterial führen. Darüber hinaus kann die Gasentwicklung an der anodisch oder kathodisch betriebenen Diamantelektrode starke Kräfte verursachen, die eine langsame Abschwächung der Anbindung bewirken. Nach einer gewissen Betriebsdauer sind zwar die Diamantpartikel 2 noch in ihrer Position, aber es ist möglich, dass Flüssigkeit zur Kontaktierungsschicht 3 durchdringt.

Um eine sehr lange Haltbarkeit auch in aggressiven Medien zu gewährleisten, ist es daher wichtig, die Kontaktierungsschicht 3 derart auszuführen, dass trotz eindringender Flüssigkeit und möglicher Korrosion des Materials der Kontaktierungsschicht 3 ein dauerhafter Kontakt mit den Diamantpartikeln 2 gewährleistet wird. Für Anwendungen der Diamantelektrode in Halogensalzen, Halogensäuren und Alkoholaten unter anodischen Bedingungen scheiden als Material für die Kontaktierungsschicht 3 praktisch alle metallischen Leiter aus. Gemäß der Erfindung werden daher für die Kontaktierungsschicht 3 entweder leitfähige Materialen, beispielsweise Keramiken oder Kunststoffe, oder Materialien, welche keine isolierenden Oxide ausbilden, beispielsweise Graphit, Kohle oder Karbonfasern, verwendet.

Für die Kontaktierungsschicht 3 gut geeignet sind leitfähige Kohlenstoffformen, wie Graphit, Kohle oder Karbonfasern. Diese Materialien oxidieren zwar bei Kontakt mit der Lösung unter anodischem Potential, bilden jedoch nur Kohlendioxid, welches durch das Material, welches poröser ist, da es als Schüttung von Partikeln oder Pulver, als Paste oder Gewebe vorliegt, entweicht. Das Material rückt nach und sorgt für einen ständigen Kontakt zu den Diamantpartikeln. Es wird ein gewisser Abtrag von Kohlenstoff in Kauf genommen, welcher durch einen entsprechenden Vorrat an Material der Kontaktierungsschicht ausgeglichen wird. Die Gesamtmenge an Strom, die über die Kontaktierung direkt umgesetzt wird (Elektrolyse) kann im Verhältnis zu der den Diamantpartikeln 2 zugeführten vernachlässigt werden.

Um eine übermäßige Elektrolyse an der Kontaktierungsschicht 3 zu verhindern, kann eine Entwässerung der Kontaktierungsschicht 3 vorgesehen werden, wodurch eindringende Lösung an der Kontaktierungsschicht 3 aktiv entfernbar ist. Bevorzugt kann dies durch den Gasdruck, welcher infolge der Elektrolyse im Kontaktraum entsteht, über geeignete Öffnungen 4 erfolgen.

Zur Verbindung des Kontaktes kann die Kontaktierungsschicht 3 zusätzlich mit einer Leitsalzlösung, vorzugsweise einer Na₂SO₄-Lösung, gefüllt werden oder aus Kohlenstoffpulver vermengt mit konzentriertem Na₂SO₄ bestehen.

Um ein Nachrücken des Kontaktierungsschichtmaterials zur Elektrode zu gewährleisten, ist es vorteilhaft, die Kontaktierungsschicht 3 mit einem konstanten Druck an die Trägerschicht 1 anzupressen. Dies kann auf unterschiedliche Weise erfolgen, beispielsweise durch ein Anspannen an eine Rückwand, durch Einrichtungen mit Federn, durch Hydraulikvorrichtungen und dergleichen. Eine weitere Möglichkeit besteht in der Nutzung des Gasdrucks der Elektrolyse im Kontaktraum.

Erfindungsgemäß ausgeführte und hergestellte Diamantelektroden können auch als pipolare Elektroden in einer elektrochemischen Zelle eingebaut verwendet werden. Solche elektrochemischen Zellen kommen für unterschiedliche Einsatzbereiche zur Anwendung, beispielsweise zur Wasser- und Abwasseraufbereitung in Industriebetrieben, zur Reinigung von Wasser in Schwimmbädern oder Whirlpools sowie zur Desinfektion von Trinkwasser.

## Patentansprüche

1. Verfahren zur Herstellung einer Diamantelektrode mit synthetisch hergestellten und elektrisch leitfähigen (dotierten) Diamantpartikeln (2), welche in eine Trägerschicht (1) aus elektrisch nicht leitfähigem Material eingebettet werden,
**dadurch gekennzeichnet,**
**dass** zwei trägerschichtbildende Folien, zwischen welchen die dotierten Diamantpartikel (2) einlagig eingebettet sind, miteinander fest verbunden werden, wobei anschließend die Diamantpartikel an beiden Seiten der Trägerschicht (1) freigelegt werden.

2. Verfahren nach Anspruch 1, **dadurch gekennzeichnet, dass** die Folien aus Glas, Keramik oder ein Kunststoff, beispielsweise PVDF, PFA, PTFE, FEP, ETFE, PEEK oder PPS, bestehen und durch Erhitzen, Verschweißen, Verlöten, Sintern, Verpressen, Walzen oder Verkleben miteinander verbunden werden.

3. Verfahren nach Anspruch 1 oder 2, **dadurch gekennzeichnet, dass** zur Freilegung der Diamantenpartikel auf die Folien weiche Materialen in Form von Platten aufgelegt werden und ein- oder beidseitig Druck aufgebracht wird, wobei die Platten vorzugsweise aus Polytetrafluoräthylen, Polyimid, Polychloropropen, thermoplastischen Vulkanisaten (TPV), Fluorpolymerisaten, Fluorkautschuken wie z.B. FPM oder FKM, PEEK, Silikonen oder weiche Metallen wie beispielsweise Blei, Aluminium oder Kupfer bestehen.

4. Verfahren nach Anspruch 3, **dadurch gekennzeichnet, dass** die Platten eine Dicke von 0,1 mm bis 3 mm, insbesondere 0,5 mm bis 1,5 mm, aufweisen.

5. Verfahren nach einem der Ansprüche 1 bis 4, **dadurch gekennzeichnet, dass** die Diamantpartikel (2) an beiden Seiten der Trägerschicht (1), auf mechanische, chemische oder thermische Weise, freigelegt werden.

6. Verfahren nach einem der Ansprüche 1 bis 5, **dadurch gekennzeichnet, dass** die Folien eine Stärke von 5 µm bis 300 µm, vorzugsweise von 10 µm bis 150 µm, aufweisen.

7. Verfahren nach einem der Ansprüche 1 bis 6, **dadurch gekennzeichnet, dass** ein Stützgewebe oder ein Stützgitter entweder zwischen die beiden Folien eingebracht wird, bevor diese miteinander verbunden werden, oder auf einer oder beiden Außenseite(n) der Trägerschicht bzw. Diamantelektrode fixiert wird, wobei das Stützgewebe oder Stützgitter insbesondere durch Laminieren, Kleben, Schmelzen, Schweißen, Verpressen oder Walzen aufgebracht wird.

8. Verfahren nach Anspruch 7, **dadurch gekennzeichnet, dass** als Material für das Stützgewebe oder Stützgitter Kunststoffe, wie beispielsweise Polytetrafluoräthylen, PVDF, PFA, PTFE, FEP, ETFE, PEEK oder PPS, ferner Glasfasern, kunststoffbeschichtete Glasfasern, Keramiken oder Metalle, wie beispielsweise Titan oder Tantal, verwendet werden.

9. Verfahren nach Anspruch 1, **dadurch gekennzeichnet, dass** an einer Seite der Trägerschicht (1) zur Kontaktierung der Diamantpartikel (2) eine Kontaktierungsschicht (3) aus elektrisch leitfähigem Material, insbesondere Graphit, Kohle oder Kohlefasern, angebracht wird, welches unter den jeweiligen Einsatzbedingungen der Diamantelektrode weder isolierende Oxide bildet noch in Lösung geht.

## Claims

1. Method of producing a diamond electrode with synthetically produced and electrically conductive (doped) diamond particles (2), which are embedded in a carrier layer (1) of an electrically non-conductive material,
**characterised in that**,
two carrier layer-forming films between which the doped diamond particles (2) are embedded in single layers, are attached to each other firmly wherein the diamond particles are then exposed on both sides of the carrier layer (1).

2. Method according to claim 1, **characterised in that** the films consist of glass, ceramic or a plastic, such as PVDF, PFA, PTFE, FEP, ETFE, PEEK or PPS, and are joined with each other by heating, welding, soldering, sintering, pressing, rolling or gluing.

3. Method according to claim 1 or 2, **characterised in that**, in order to expose the diamond particles on the films, soft materials in the form of plates are placed on them and pressure is applied on one or both sides, wherein the plates consist preferably of polytetrafluoroethylene, polyimide, polychloroproprene, thermoplastic vulcanisates (TPV), fluoropolymerisates, fluorocarbon elastomers, such as FPM or FKM, PEEK, silicones or soft metals, such as lead, aluminium or copper.

4. Method according to claim 3, **characterised in that** the thickness of the plates is from 0.1 mm to 3 mm, in particular from 0.5 mm to 1.5 mm.

5. Method according to one of claims 1 to 4, **characterised in that** the diamond particles (2) are exposed on both sides of the carrier layer (1) in a mechanical, chemical or thermal manner.

6. Method according to one of claims 1 to 5, **characterised in that** the thickness of the films is from 5 µm to 300 µm, preferably from 10 µm to 150 µm.

7. Method according to one of claims 1 to 6, **characterised in that** a supporting tissue or a supporting web is inserted either between the two films before they are joined together, or is fixed on one or both outer sides of the carrier layer(s) or diamond electrode wherein the supporting tissue or supporting web is attached, in particular, by laminating, gluing, melting, welding, pressing or rolling.

8. Method according to claim 7, **characterised in that** plastics, such as polytetrafluoroethylene, PVDF, PFA, PTFE, FEP, ETFE, PEEK or PPS, or also glass fibres, plastic-coated glass fibres, ceramics or metals, such as titanium or tantalum, are used as material for the supporting tissue or supporting web.

9. Method according to claim 1, **characterised in that**, for contacting the diamond particles (2), on one side of the carrier layer (1), a contacting layer (3) of an electrically conducting material, in particular graphite, carbon or carbon fibres, is attached which neither forms insulating oxide nor goes into solution under the particular conditions in which the diamond electrode is used.

## Revendications

1. Procédé pour la fabrication d'une électrode en diamant à particules (2) électroconductrices (à dopage) et obtenues par synthèse, lesquelles sont intégrées dans une couche support (1) en matériau non électroconducteur,
**caractérisé en ce que**
deux films formant une couche support, entre lesquels les particules de diamant (2) à dopage sont intégrées en une seule couche, sont fixés l'un à l'autre, les particules de diamant étant ensuite exposées des deux côtés de la couche support (1).

2. Procédé selon la revendication 1, **caractérisé en ce que** les films sont composés de verre, de céramique ou d'une matière plastique, telle que PVDF, PFA, PTFE, FEP, ETFE, PEEK ou PPS, et qu'ils sont fixés l'un à l'autre par chauffage, soudage, brasage, frittage, moulage par compression, laminage ou collage.

3. Procédé selon la revendication 1 ou 2, **caractérisé en ce que** des matériaux souples sont déposés sous forme de plaques et une pression unilatérale ou bilatérale est appliquée afin de dénuder les particules en diamant sur les films, les plaques étant composées de préférence de polytétrafluoroéthylène, polyimide, polychloroprène, vulcanisats thermoplastiques (TPV), polymérisats de fluor, caoutchouc fluoré tel que FPM ou FKM, PEEK, silicones ou de métaux tendres tels que le plomb, l'aluminium ou le cuivre.

4. Procédé selon la revendication 3, **caractérisé en ce que** les plaques présentent une épaisseur de 0,1 mm à 3 mm, et notamment de 0,5 mm à 1,5 mm.

5. Procédé selon l'une des revendications 1 à 4, **caractérisé en ce que** la dénudation des particules de diamant (2) est réalisée des deux côtés de la couche support (1) par voie thermique, chimique ou mécanique.

6. Procédé selon l'une des revendications 1 à 5, **caractérisé en ce que** les films présentent une épaisseur de 5 µm à 300 µm, de préférence de 10 µm à 150 µm.

7. Procédé selon l'une des revendications 1 à 6, **caractérisé en ce qu'**un treillis porteur ou une grille de support soit est disposé entre les deux films avant qu'ils ne soient fixés l'un à l'autre, soit est fixé sur l'un ou les deux côté(s) extérieur(s) de la couche support ou de l'électrode en diamant, le treillis porteur ou la grille de support étant appliqué notamment par laminage, collage, fonte, soudage ou moulage par compression.

8. Procédé selon la revendication 7, **caractérisé en ce que** des matières plastiques, telles que du polytétrafluoroéthylène, PVDF, PFA, PTFE, FEP, ETFE, PEEK ou PPS, également des fibres de verre, fibres de verre plastifiées, céramiques ou métaux tels que le titane ou le tantale, sont utilisés comme matériau destiné au treillis porteur ou à la grille de support.

9. Procédé selon la revendication 1, **caractérisé en ce qu'**une couche de contact (3) en matériau électroconducteur, notamment en graphite, carbone ou fibres de carbone, est appliquée sur un côté de la couche support (1) afin de permettre le contact entre les particules de diamant (2), ledit matériau électroconducteur ni ne forme un oxyde isolant, ni ne passe en solution dans les conditions d'utilisation respectives de l'électrode en diamant.
